# EUROPÄISCHE PATENTSCHRIFT

(11) **EP 2 284 317 B1**
(45) Veröffentlichungstag und Bekanntmachung des Hinweises auf die Patenterteilung: **10.09.2014**
(21) Anmeldenummer: 10007365.9
(22) Anmeldetag: 15.07.2010
(51) Int. Cl.: E01B 35/00, G01M 17/10

(54) **Vorrichtung zum Prüfen von Bahnschienen oder bahntechnischen Fahrbahnkomponenten durch Verwendung eines Linearprüfstandes**
Device for inspecting railway rails or track components by using a linear test facility
Dispositif de vérification de rails ou de composants d'une voie ferrée en utilisant un banc de contrôle linéaire

(30) Priorität: 13.08.2009 DE 102009037072
(43) Veröffentlichungstag der Anmeldung: 16.02.2011
(73) Patentinhaber: Deutsche Bahn AG, 10785 Berlin (DE)
(72) Erfinder: Ullrich, Detlev, 12621 Berlin (DE); Zoll, Andreas, 14789 Wusterwitz (DE)
(74) Vertreter: Zinken-Sommer, Rainer

(56) Entgegenhaltungen:
- AT-B- 409 796
- DE-A1- 2 601 259
- DE-A1- 2 706 240
- DE-B4- 19 943 744
- DE-B4-102004 021 488
- DE-U1-202004 008 699

## Beschreibung

Die Erfindung betrifft eine Vorrichtung zum Prüfen von Bahnschienen oder bahntechnischen Fahrbahnkomponenten durch Verwendung eines Linearprüfstandes mit einem Radprofil.

Der Rollkontakt zwischen Eisenbahnrädern und -schienen wirft nach wie vor eine Vielzahl ungeklärter Fragen, z.B. nach Schadensentstehung, Einfluss von Werkstoffen und Schienengeometrien sowie optimalen Instandhaltungsverfahren auf. Neue oder verbesserte Konstruktionen von Oberbaukomponenten oder deren Instandhaltungsverfahren müssen daher in aller Regel unter Betriebsbedingungen erprobt werden, was den realen Bahnbetrieb beeinflusst und Restrisiken beinhaltet. Weiterhin sind Erprobungen im realen Gleis sehr zeitaufwändig, teuer und durch Witterungseinflüsse oder Schwankungen im Betriebsablauf schwer reproduzierbar.
Daher werden oft Prüfstände verwendet, die den Rollkontakt zwischen Rad und Schiene adäquat nachbilden.
Es ist eine Reihe von Prüfprinzipien bekannt. So wird der Werkstoffverschleiß gern mit Hilfe sogenannter Amsler-Prüfungen durchgeführt, wobei kleine, zylinderförmige Probekörper von Rad und Schiene mit unterschiedlicher Geschwindigkeit aufeinander abwälzen. Der Verschleiß, der nach einer bestimmten Überrollungszahl eingetreten ist, kann dann durch Wägung festgestellt werden. Hierbei müssen allerdings andere Einflüsse, wie der der geometrischen Form oder der unterschiedlichen Skalierung vernachlässigt werden.
Daneben werden Großprüfstände eingesetzt, die den Rollkontakt im Maßstab 1:1 oder nur wenig verkleinert nachbilden. Die gängigen Prüfprinzipien sind Rad-auf-Rolle-Prüfstände, bei denen ein komplettes Eisenbahnrad oder ein Radsatz unter Last auf einer Schienenrolle abrollt, oder Linearprüfstände, bei denen das Rad auf einem geraden Schienenstück hin- und herbewegt wird. Beide Prüfprinzipien werden bei der DB AG in Brandenburg-Kirchmöser eingesetzt. Hier können Rollkontaktverschleiß, - ermüdung und zugehörige Schäden im Originalmaßstab beobachtet und analysiert werden.
Ein solches Prüfprinzip ist z.B. durch das Deutsche Gebrauchsmuster DE 20 2004 008 699 U1 beschrieben.

Die DE 10 2004 021 488 B4 beschreibt einen Prüfstand für Drehgestelle und/oder Radsätze von Schienenfahrzeugen mit zwei Gleisabschnitten, die längs hintereinander angeordnet sind und ein durchgehendes Gleis bilden, wobei ein beweglicher und ein fester Gleisabschnitt vorgesehen ist und der bewegliche von dem ortfesten Gleisabschnitt vollständig entkoppelt ist.

Aus der DE 199 43 744 B4 ist ein Verfahren und eine Vorrichtung zur Radsatzprüfung bekannt, wobei die Prüfeinrichtung mindestens einen zugeordneten Rechner zum Automatisieren der gesamten Schadensprüfung einschließlich dem Bewegen und Regeln der Prüfungseinrichtung bis zur Dokumentation aufweist. Die Vorrichtung weist eine Führungseinrichtung auf, die durch einen Elektro- oder Hydraulikantrieb beschleunigbar und bremsbar ist. Die Führungseinrichtung verfügt über Bahnen für den Vorlauf und Rücklauf der Prüfeinrichtung.

Die DE 26 01 259 beschreibt eine Einrichtung zur betriebsähnlichen Prüfung von Radsätzen für Schienenfahrzeuge, bei der das Rad des Prüflings auf der Innenseite einer ringförmigen, die Schiene ersetzenden, Laufbahn abrollt und bei der Einrichtung zur Belastung des Radsatzes vorgesehen sind, wobei die Trommel mit Schienenprofil um das Rad umläuft und die Trommel gegenüber dem Radsatz derart um den Winkel α schräggestellt ist, dass die Krafteinleitung nur am Radaufstandspunkt erfolgt.

Bei den DE 10 2004 021 488 B4, DE 199 43 744 B4 und DE 26 01 259 handelt es sich um Prüfeinrichtungen für Fahrzeugkomponenten von denen keine für Linearprüfstände geeignet ist.

Während Rollprüfstände in der Regel hohe Geschwindigkeiten und sehr homogene Kontaktverhältnisse realisieren können, ist ihr Nachteil, dass sie sich nicht für reguläre Schienen eigenen, da diese ja zunächst in Rollenform gebracht werden müssten.
In Linearprüfständen können dagegen reguläre Schienenstücke verwendet werden, auf die ein Eisenbahnrad mit realem Profil unter Last aufgestellt wird. Durch Hin- und Herbewegung des Schienenstückes entsteht der Rollkontakt. Das Prüfprinzip hat allerdings den Nachteil dass sich in der Regel kein gleichmäßiger Fahrspiegel herausbildet, es sei denn, man bringt sehr hohe Seitenkräfte in den Rollkontakt ein. In jedem Fall entstehen durch diese Einflüsse eher untypische Verschleißbilder.

Aus der DE 27 06 240 C3 ist ein Messrad für Schienenfahrzeuge bekannt, wobei der Radkranz des Messrades zumindest an der Fahrfläche ein Schienenprofil aufweist und an einem weiteren, das Profil von Schienenrädern aufweisenden Rad abrollt, und dass die Ausnehmungen mit Fühlern im Schienenkopf des das Schienenprofil aufweisenden Rades in unmittelbarer Nähe der Fahrfläche angeordnet sind.

Der Erfindung liegt die Aufgabe zugrunde, eine Vorrichtung zu schaffen, mit der der Rollkontakt an echten Schienenstücken auch an einem Linearprüfstand nachgebildet werden kann, wobei reale Kräfte und weit gehend reale Skalierungen eingesetzt werden. Insbesondere sollen Rollkontaktermüdung und -verschleiß an der Fahrkante realistisch nachgebildet werden.

Dies wird erfindungsgemäß dadurch erreicht, dass
das auf der Bahnschiene oder bahntechnischen Fahrbahnkomponente (1) aufgesetzte Eisenbahnrad (3) an seiner Peripherie ein symmetrisches Radprofil (4) aufweist, das aus zwei zueinander spiegelbildlichen Teilen (6) und (7) eines regulären, bahntypischen Radprofils zusammengesetzt ist und das an seinen Außenseiten beidseitig jeweils einen Spurkranz (5) besitzt.

An der Schiene und/oder am Eisenbahnrad ist eine Wasserauftragsvorrichtung oder eine Schmiermittelauftragsvorrichtung angeordnet. Damit wird die Vorrichtung während des Betriebes wenigstens zeitweise benetzt oder besprüht.

Ein an und für sich bekannter, bei der DB im Einsatz befindlicher Linearprüfstand wird mit einer zusätzlichen Einrichtung ausgestattet, bei der das Rad um seine Hochachse gedreht wird. Weiterhin erhält der Radsatz ein Profil mit zwei Spurkränzen, das durch Spiegelung zweier regulärer Radprofile entsteht. Wesentlich ist weiterhin, dass die Schiene in sich symmetrisch um die Hochebene ist.
Durch die Drehung des Rades um die Hochachse, entsteht zwischen der Bewegungsrichtung der Schiene und der Rotationsebene des Rades ein sogenannter Anlaufwinkel. Dieser ist in der Bahntechnik bekannt. Er tritt typischerweise in einer Größenordnung zwischen 0 und 8 mrad bei der Fahrt von Bahnfahrzeugen durch einen Gleisbogen auf. Er führt dazu, dass die Fahrkante der äußeren Schiene stärker verschleißt und sich an ihr Rollkontaktermüdungsschäden, die so genannten Head Checks, bilden.

Bewegt sich jetzt auf dem Linearprüfstand die Schiene unter dem Rad, dann läuft das Rad mit dem einen Spurkranz gegen die Fahrkante der Schiene, bis im Kontaktpunkt ein Kräftegleichgewicht zwischen der schieneneinwärts wirkenden Reibkraft und der schienenauswärts wirkenden Hangabtriebskraft gebildet hat. Hierbei entstehen die aus der Bahnpraxis bekannten Effekte der Rollkontaktermüdung und -verschleiß, die auf diese Weise am Prüfstand erprobt werden.
Problematisch ist der Rückweg der Schiene.

Da das erfindungsgemäße Rad aus zwei zueinander spiegelbildlichen Radprofilen besteht und die Schiene in sich ebenfalls symmetrisch ist, kann das erfindungsgemäße Rad aufgrund seiner symmetrischen Ausbildung mit dem beiderseitigem Spurkranz auf dem Rückweg nur so weit aus der ursprünglichen Fahrkante sich herausbewegen, bis sich auf der gegenüberliegenden Seite ebenso ein Gleichgewicht der Kräfte herausgebildet hat, wie auf der ursprünglichen.
Auf diese Weise "pendelt" das Rad zwischen den Berührpunkte auf der einen und der anderen Schienenseite hin und her, wobei in jedem Fall realistische und nach kurzem Anlaufweg stabile Kontaktverhältnisse herrschen.

### Vorteile der Erfindung:

- Erprobung von Rad- und Schienenkomponenten im Originalmaßstab
- Anlaufen des Rades an die Fahrkante
- Vermeidung des Einbringens übermäßiger Querkräfte
- Erreichen eines gleichmäßigen Fahrspiegels
- Simulation von Umwelteinflüssen wie Nässe, Schmierung u.ä.
- Herausbildung von zwei Kontaktgebieten in einer Versuchsanordnung gleichzeitig, die unabhängig voneinander durch die Pendelbewegung beim Vor- und Zurückfahren entstehen.

Nachfolgend soll die Erfindung anhand eines Ausführungsbeispieles näher erläutert werden.

Dabei zeigt:

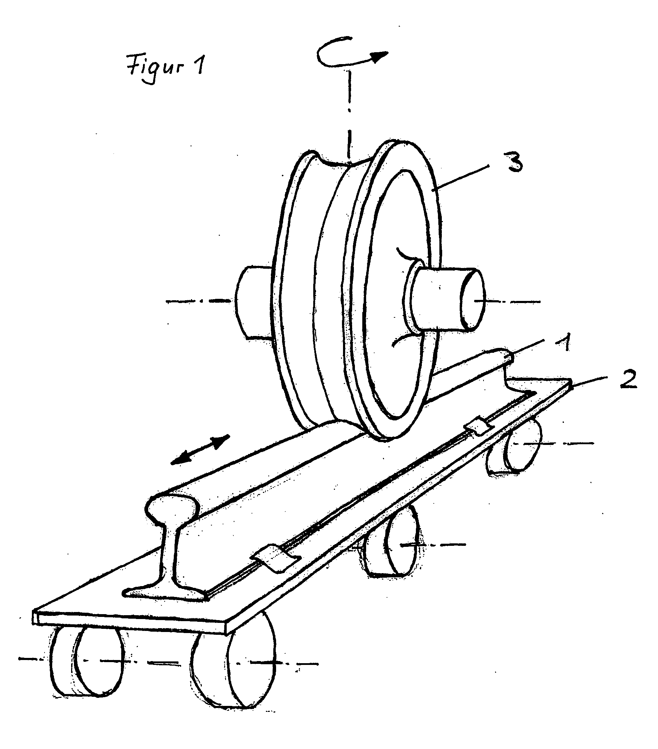

- Figur 1 - Schienenprüfstand mit Doppelprofil im Schema

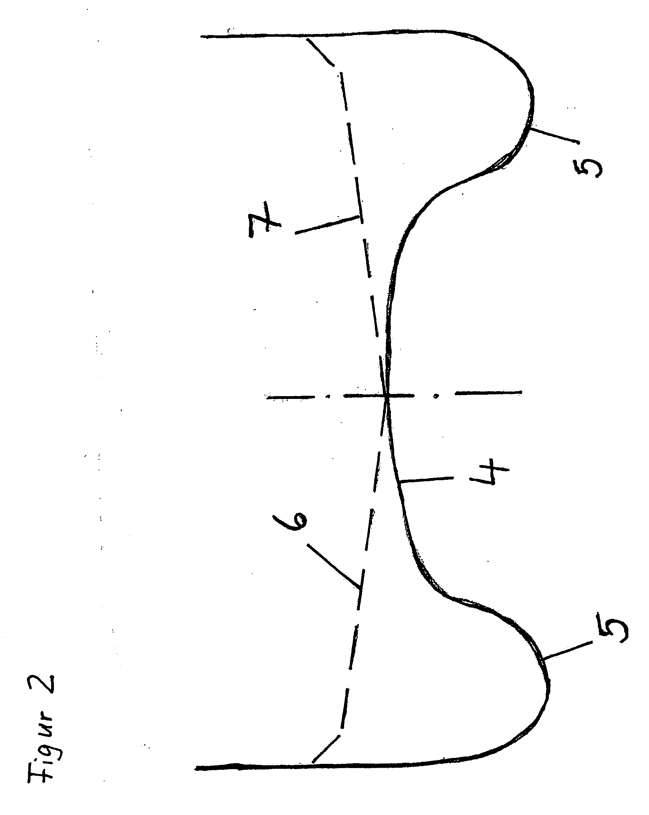

- Figur 2 - ein Doppelprofil für eine Schienenprüfung in einem Linearprüfstand

Durch die Erfindung soll der Verschleiß und die Rollkontaktermüdung von Schienen unter bahntypischen Beanspruchungen in einem Prüfstand praxisnah und kostengünstig untersucht werden.

Das zu prüfende Schienenstück (1) ist auf einer Konsole (2) befestigt, wobei vorzugsweise bahnübliche Befestigungssysteme und elastische Zwischenlagen verwendet werden. Die Konsole ist auf einem Rollensystem in Längsrichtung der Schiene verfahrbar. Sie wird von einem Antriebssystem, vorzugsweise einem Antriebsmotor mit Exzentertrieb, hin- und herbewegt. Das Antriebssystem ist Stand der Technik und daher hier nicht weiter dargestellt.

Über dem Schienenstück (1) befindet sich ein in seiner Achse drehbar gelagertes Eisenbahnrad (3), das erfindungsgemäß an seiner Peripherie ein symmetrisches Radprofil (4) aufweist, wobei das Radprofil (4) mit der Oberseite des Schienenstückes (1) in Eingriff kommt. Das erfindungsgemäße Radprofil besitzt weiterhin an seinen Außenseiten beidseitig jeweils einen Spurkranz (5). Es ist aus zwei zueinander spiegelbildlichen Teilen (6) und (7) eines regulären, bahntypischen Radprofils zusammengesetzt. Das Eisenbahnrad (3) kann durch den nicht dargestellten Prüfstand vertikal mit eisenbahntypischer Vertikalkraft beaufschlagt werden.

Wird nun das Schienenstück (1) durch das Antriebssystem hin- und herbewegt, so bilden sich zwischen dem Radprofil (4) und der Oberseite des Schienenstückes (1) zwei Kontaktbereiche heraus, die geometrisch identische Bedingungen zu dem Kontaktbereich zwischen einem regulären Eisenbahnrad und einer regulären Bahnschiene im Eisenbahnbetrieb haben und die mit den regulären, bahntypischen Druckkräften beaufschlagt sind. Dadurch ist bereits erfindungsgemäß eine zweifache Prüfung des Rollkontaktverschleißes und der Rollkontaktermüdung am Schienenstück (1) möglich, wobei allerdings die Kraftverteilung zwischen den beiden Kontaktpunkten mechanisch unbestimmt ist.

Vorteilhaft lässt sich diese Konstellation weiter ausnutzen, wenn das Eisenbahnrad (2) zusätzlich so um die Vertikalachse gedreht wird, dass zwischen der Rotationsebene des Eisenbahnrades (3) und der in Längsrichtung verlaufenden Symmetrieebene der Schiene oder bahntechnischen Fahrbahnkomponente (1) ein Anlaufwinkel von vorzugsweise 0 bis 8 mrad ausgebildet ist. Dies hat zur Folge, dass das Eisenbahnrad (3) bei der Hin- und Herbewegung jeweils einmal in Richtung des einen einen, einmal in Richtung des anderen Spurkranzes bewegt wird, wobei sich nur noch ein Kontaktpunkt herausbildet. Dadurch wird vermieden, dass der Kontaktpunkt in wechselnder Richtung überrollt wird, was in der bahntechnischen Realität nur selten vorkommt und daher nachteilig wäre. Weiterhin wird hierdurch stets die definierte Vertikalkraft in den Kontaktpunkt eingeleitet.
Zudem wird durch den Anlaufwinkel erreicht, dass Eisenbahnrad (3) und das Schienenstück (1) im Kontaktpunkt eine Gleitbewegung in Querrichtung ausführen, die für die Beanspruchung der Schiene insbesondere beim Durchfahren von Gleisbögen charakteristisch ist.

Durch den als vorzugsweise genannten Winkelbereich von 0 bis 8 mrad wird gewährleistet, dass der von der Gleitbewegung verursachte Verschleiß nicht überhand nimmt und die Prüfeinrichtung zerstört.

Es kann sich als günstig erweisen, Rollkontaktermüdung und den Verschleiß von Schienen für spezielle Gleislagen, z.B. für besonders hoch beanspruchte Gleisbögen, zu ermitteln. In diesem Fall muss der vorgenannte Anlaufwinkel vorzugsweise dem typischen Anlaufwinkel von Eisenbahnrädern bei der Fahrt durch den Gleisbogen entsprechen, wobei der Winkel zuvor durch Messungen im Gleis oder durch Simulationsrechnungen ermittelt werden muss.
Ebenso kann es sich als günstig erweisen, zusätzlich den Einfluss von Schmierung oder Befeuchtung des Kontaktbereiches auf Rollkontaktermüdung und - verschleiß zu untersuchen. Dazu wird an dem Schienenstück (1) und/oder am Eisenbahnrad (3) eine Wasserauftragsvorrichtung oder eine Schmiermittelauftragsvorrichtung angeordnet.

Schließlich kann es günstig sein, die Versuchsanordnung auf spezielle Schienenkonstruktionen anzuwenden, bei denen das Schienenstück (1) oder die bahntechnische Fahrbahnkomponente vorzugsweise Schweißverbindungen und/oder gefügebeeinflusste Bereiche aufweist.

## Patentansprüche

1. Vorrichtung zum Prüfen von Bahnschienen oder bahntechnischen Fahrbahnkomponenten durch Verwendung eines Linearprüfstandes, der aus einer hin und her bewegten, mit einem regulären Profil ausgestatteten Bahnschiene oder bahntechnischen Fahrbahnkomponente (1) besteht, die auf einer Konsole (2) in Längsrichtung hin und her verfahren wird und auf die ein in seiner Achse drehbar gelagertes Eisenbahnrad (3) unter bahntypischer Last aufgestellt ist,
***gekennzeichnet dadurch, dass***
das auf der Bahnschiene oder bahntechnischen Fahrbahnkomponente (1) aufgesetzte Eisenbahnrad (3) an seiner Peripherie ein symmetrisches Radprofil (4) aufweist, das aus zwei zueinander spiegelbildlichen Teilen (6) und (7) eines regulären, bahntypischen Radprofils zusammengesetzt ist und das an seinen Außenseiten beidseitig jeweils einen Spurkranz (5) besitzt.

2. Vorrichtung nach Anspruch 1, **dadurch gekennzeichnet, dass** das Eisenbahnrad (3) so um die in vertikaler Richtung zur Bahnschiene oder bahntechnischen Fahrbahnkomponente (1) zur Schiene definierten Hochachse gedreht ist, dass zwischen der Rotationsebene des Eisenbahnrades (3) und der in Längsrichtung verlaufenden Symmetrieebene der Schiene oder bahntechnischen Fahrbahnkomponente (1) ein Anlaufwinkel von vorzugsweise 0 bis 8 mrad ausgebildet ist.

3. Vorrichtung nach Ansprüchen 1 und 2 **dadurch gekennzeichnet, dass** der Anlaufwinkel vorzugsweise dem Anlaufwinkel von Eisenbahnrädern bei der Fahrt durch Gleisbögen entspricht.

4. Vorrichtung nach Anspruch 1, ***dadurch gekennzeichnet, dass*** an der Schiene und/oder am Eisenbahnrad eine Wasserauftragsvorrichtung oder eine Schmiermittelauftragsvorrichtung angeordnet ist.

5. Vorrichtung nach Anspruch 1, ***dadurch gekennzeichnet, dass*** die Bahnschiene oder bahntechnische Fahrbahnkomponente Schweißverbindungen und/oder gefügebeeinflusste Bereiche aufweist.

## Claims

1. A device for testing rails or trackway components by utilizing a linear test stand consisting of a reciprocating rail or trackway component (1) with regular profile that is longitudinally moved in a reciprocating fashion on a console (2) and onto which an axially rotatable rail vehicle wheel (3) is placed under typical railway loads,
***characterized in that***
the rail vehicle wheel (3) placed onto the rail or trackway component (1) has on its periphery a symmetric wheel profile (4) that is composed of two mirror-inverted parts (6) and (7) of a regular rail vehicle wheel profile and respectively features a wheel flange (5) on both of its outer sides.

2. The device according to Claim 1, **characterized in that** the rail vehicle wheel (3) is turned about the normal axis defined vertically to the rail or trackway component (1) in such a way that a striking angle of preferably 0 to 8 mrad is formed between the plane of rotation of the rail vehicle wheel (3) and the longitudinally extending plane of symmetry of the rail or trackway component (1).

3. The device according to Claim 1 or 2, **characterized in that** the striking angle preferably corresponds to the striking angle of rail vehicle wheels while traveling through curved tracks.

4. The device according to Claim 1, ***characterized in that*** a water application device or a lubricant application device is arranged on the rail and/or on the rail vehicle wheel.

5. The device according to Claim 1, ***characterized in that*** the rail or trackway component features welded joints and/or structurally manipulated areas.

## Revendications

1. Dispositif de contrôle de rails ferroviaires ou de composants techniques ferroviaires de voies en utilisant un banc de contrôle linéaire qui est composé d'un rail ferroviaire ou d'un composant technique ferroviaire de voie (1) bougeant en va et vient et pourvu d'un profil normal et qui est déplacé en va et vient sur une console (2) dans le sens longitudinal et posé sur une roue ferroviaire (3) s'appuyant en rotation dans son essieu et est sous charge typique d'une voie,
***caractérisé en ce que***
la roue ferroviaire (3) posée sur le rail ferroviaire ou le composant technique ferroviaire de voie (1) présente sur sa périphérie un profil de roue symétrique (4) qui est composé de deux pièces positionnées mutuellement en symétrie miroir (6) et (7) d'un profil de roue ferroviaire normal typique d'une voie et qui possède sur ses faces extérieures respectivement un boudin (5) des deux côtés.

2. Dispositif selon la revendication 1, **caractérisé en ce que** la roue ferroviaire (3) est tournée dans le sens vertical allant vers le rail ferroviaire ou le composant technique ferroviaire de voie (1) en direction de l'axe vertical défini par rapport au rail de manière à ce que, entre l'axe de rotation de la roue ferroviaire (3) et le plan de symétrie du rail ferroviaire ou du composant technique ferroviaire de voie (1) s'étendant dans le sens longitudinal, un angle d'attaque de préférence de 0 à 8 mrad soit décrit.

3. Dispositif selon les revendications 1 et 2, **caractérisé en ce que** l'angle d'attaque équivaut de préférence à l'angle d'attaque de roues ferroviaires circulant sur des courbes de voie.

4. Dispositif selon la revendication 1, ***caractérisé en ce qu'**un* dispositif d'application d'eau ou un dispositif d'application de lubrifiant est disposé au niveau du rail et/ou de la roue ferroviaire.

5. Dispositif selon la revendication 1, ***caractérisé en ce que*** le rail ferroviaire ou le composant technique ferroviaire de voie présente des raccords soudés et/ou des zones influencées par la structure.
